Europäisches Patentamt

European Patent Office

Office européen des brevets

(11) Publication number: **0 421 717 A2**

# EUROPEAN PATENT APPLICATION

(21) Application number: 90310751.4

(22) Date of filing: 02.10.90

(51) Int. Cl.⁵: **G09G 1/14, G06K 15/02, G09G 5/24**

(30) Priority: 02.10.89 US 416211

(43) Date of publication of application:
**10.04.91 Bulletin 91/15**

(84) Designated Contracting States:
**DE FR GB**

(71) Applicant: **XEROX CORPORATION**
**Xerox Square - 020**
**Rochester New York 14644(US)**

(72) Inventor: **Marshall, Sidney W.**
**1180 Hidden Valley Trail**
**Webster, New York 14580(US)**

(74) Representative: **Goode, Ian Roy et al**
**Rank Xerox Patent Department Albion**
**House, 55 New Oxford Street**
**London WC1A 1BS(GB)**

(54) **Rapid halfbitting stepper.**

(57) In an electronic printing system having a memory for storing graphical objects in outline form as splines, the method of rapidly converting the graphical objects in outline form as splines to raster bit map form for imaging pixels on a raster device. The method comprises the steps of allocating a set of memory locations for output bit maps and initializing the memory locations, operating a stepper routine for each spline in a set of splines including the step of resolving diagonal operations into either x-y or y-x orthogonal steps to produce a quasi-outline of the graphical object and storing the quasi-outline in said memory locations, Exclusive OR Gating each successive raster scan line of the object with the result of the Exclusive OR Gating of the preceding scan line to fill in the graphical object, and producing the graphical object on said raster device.

EP 0 421 717 A2

The invention generally relates to printing systems storing characters in outline form for printing and, more particularly, to a method of rapid and efficient conversion of the characters before printing including a procedure for resolving diagonal steps in the conversion process.

In many electronic printing systems, it is desirable to store characters in outline form and convert them to raster form just before printing. This improves such things as font storage utilization and flexibility in size and orientation of characters. One technique that can make raster characters look better is the technique of halfbitting. This enables character scaling and anamorphic transformations to be performed on a single contour character to generate several raster versions of the character. The printer then can offer a wide variety of character sizes and looks without a large amount of storage space for the character rasters.

A difficulty with the prior art systems that store characters in contour form for conversion to raster form on demand is the relatively slow and inefficient process of conversion. For example, it is known how to represent characters in outline form which can be scaled and still retain the proper visual impact. This technique requires scaling different parts of the outline differently which results in different transformations for different parts of the character, and this is conventionally done in a relatively inefficient manner.

It is an object of the present invention, therefore, to provide a new and improved technique for the conversion of contour characters to raster characters.

The invention accordingly provides a method of rapidly converting graphical objects in outline form to raster bit map form for imaging pixels on a raster device by successive scan lines in an imaging system having a memory for storing the graphical objects in outline form comprising the steps of:
allocating a set of memory locations for output bit maps and initializing the memory locations,
operating a stepper routine for each segment of the outline formto produce a quasi-outline of the graphical object and storing the quasi-outline in said memory locations, said quasi-outline indicating the start and end of each scan line of the graphical object, and
successively Exclusive OR-gating each scan line into the following scan line to produce a filled raster object.

In another aspect, there is provided a method of rapidly converting graphical objects in outline form represented as splines to raster bit map form suitable for imaging pixels on a raster device comprising the steps of allocating a set of memory locations for output bit maps and initializing the memory locations, operating a stepper routine for each spline in a set of splines including the step of resolving diagonal operations into either $x$-followed-by-$y$ or $y$-followed-by-$x$ orthogonal steps to produce a quasi-outline of the graphical object and storing the quasi-outline in said memory locations, exclusive ORing each successive raster scan line of the object with the result of the exclusive ORing of the preceding scan line to fill in the graphical object, and producing a bitmap of the graphical object suitable for imaging on said raster device.

A method in accordance with the invention will now be described, by way of example, with reference to the accompanying drawings wherein the same reference numerals have been applied to like parts and wherein:

Figure 1 is a spline stepper in accordance with the present invention;

Figure 2 illustrates lines of and initial outlined form with 1.5,2.0,2.5 and 3.0 pixels.

Figure 3 illustrates halfbitting sampling locations;

Figures 4, 5, and 6 illustrate disambiguation transition tables for no halfbitting, $X$-direction halfbitting, and $Y$-direction halfbitting respectively in accordance with the present invention; and

Figure 7 illustrates the XOR filling.

A general nth order Bezier spine is defined by its control points $\mathbf{P}_i$ where $i$ ranges from 0 to $n$ and describes the curve

2

$$X(t) = \sum_{i=0}^{n} \binom{n}{i} t^i (1 - t)^{(n - i)} P_i$$

**or equivalently**

$$X(t) = \sum_{i=0}^{n} \binom{n}{i} t^i \sum_{j=0}^{i} \binom{i}{j}(-1)^{(i - j)} P_j$$

**where**

$$\binom{n}{i}$$

is the binomial coefficient and the independent parameter $t$ ranges between 0 and 1. This representation for splines has the advantage that an affinely transformed spline has the control points given by affine transforming its control points by the same affine transformation. This allows for rapid calculation of the control points of a transformed spline. Note that the second expression is a polynomial in terms of the differences

$$\sum_{j=0}^{i} \binom{i}{j}(-1)^{(i - j)} P_j$$

of the control points $P_j$. These differences can be quickly calculated using only additions and subtractions. Defining these differences as

$$D_i = \sum_{j=0}^{i} \binom{i}{j}(-1)^{(i - j)} P_j$$

we have

$$X(t) = \sum_{i=0}^{n} \binom{n}{i} D_i t^i$$

These differences can be calculated by means of the following tableau:

$$P_0 = D_0$$
$$P_1 - P_0 = D_1$$
$$P_1 \qquad (P_1 - P_0) - (P_2 - P_1) = D_2$$
$$P_2 - P_1 \qquad [(P_2 - P_1) - (P_3 - P_2)] - [(P_1 - P_0) - (P_2 - P_1)] = D_3$$
$$P_2 \qquad (P_2 - P_1) - (P_3 - P_2)$$
$$P_3 - P_2$$
$$P_3$$

etc.

Defining the difference operator

$$\Delta^0 X(t) \equiv X(t)$$

$$\Delta^{k+1} X(t) \equiv \Delta^k X(t+\delta) + \Delta^k X(t)$$

and consequently

$$\Delta^{k+l} X(t) \equiv \sum_{j=0}^{l} (-1)^{(l-j)} \binom{l}{j} \Delta^k X(t+j\delta)$$

Where $\delta = 2^{-q}$ is a step size we get

$$\Delta^k X(t) \equiv \sum_{j=0}^{k} \binom{k}{j}(-1)^{(k-j)} \sum_{i=0}^{n} \binom{n}{i} \sum_{l=0}^{i} \binom{i}{l} t^l (j\delta)^{i-l} D_i$$

At $t = 0$ we have

$$\Delta^k X(0) \equiv \sum_{i=0}^{n} \binom{n}{i} \delta^i D_i \, k! \, \overline{S}_i^k$$

where

$$k! \, \overline{S}_i^k = \sum_{j=0}^{k} (-1)^{(k-j)} \binom{k}{j} j^i$$

The coefficients $S_i^k$ are called the Stirling numbers of the second kind. They satisfy the following relationships:

$$\vec{S}_0^k = 0 \,,\, k \neq 0$$

$$\vec{S}_0^0 = 1$$

$$\vec{S}_i^0 = 0 \,,\, i \neq 0$$

$$\vec{S}_{i+1}^k = k\vec{S}_i^k + \vec{S}_i^{k-1}$$

Therefore, a stepper to step along a Bezier spline of order $n$ with control points $P_i$ can be constructed by first calculating the $n + 1$ differences

$D_0 = P_0$
$D_1 = P_1 - P_0$
$D_2 = P_2 - 2P_1 + P_0$
$D_3 = P_3 - 3P_2 + 3P_1 - P_0$

using the above difference tableau and then calculating the starting register pair values $R_i$ from the set of equations corresponding to the order of the spline. The register pair $R_i$ is a set of two registers, one for $x$ and one for $y$.

Forward differences for order $n$ splines:

$n = 1$:
$R_0 = D_0$
$R_1 = D_1\delta$
$n = 2$:
$R_0 = D_0$
$R_1 = 2D_1\delta + D_2\delta^2$
$R_2 = 2D_2\delta^2$
$n = 3$:
$R_0 = D_0$
$R_1 = 3D_1\delta + 3D_2\delta^2 + D_3\delta^3$
$R_2 = 6D_2\delta^2 + 6D_3\delta^3$
$R_3 = 6D_3\delta^3$

Backward differences are similar to forward differences except that the differences are of points with negative $t$.

Backward differences for order $n$ splines:

$n = 1$:
$R_0 = D_0$
$R_1 = D_1\delta$
$n = 2$:
$R_0 = D_0$
$R_1 = 2D_1\delta - D_2\delta^2$
$R_2 = 2D_2\delta^2$
$n = 3$:
$R_0 = D_0$
$R_1 = 3D_1\delta - 3D_2\delta^2 + D_3\delta^3$
$R_2 = 6D_2\delta^2 - 6D_3\delta^3$
$R_3 = 6D_3\delta^3$

Once the register pair values are calculated successive values of the spline coordinates can be calculated by:

Forward differences (using only the first $n$ equations for an order $n$ spline):

$R_0 \leftarrow R_0 + R_1$
$R_1 \leftarrow R_1 + R_2$
$R_2 \leftarrow R_2 + R_3$

...

Backward differences (using only the first n equations for an order n spline):

...

$R_2 \leftarrow R_2 + R_3$

$R_1 \leftarrow R_1 + R_2$

$R_0 \leftarrow R_0 + R_1$

where the R values stand for a pair [RX, RY] of registers. There must be as many register pairs as one more than the order of the spline to be plotted.

Forward difference equations have the advantage that all additions can be performed simultaneously in a hardware implementation while the backward difference scheme may be more efficient in software and has the advantage that the starting point of the previous step is easy to compute.

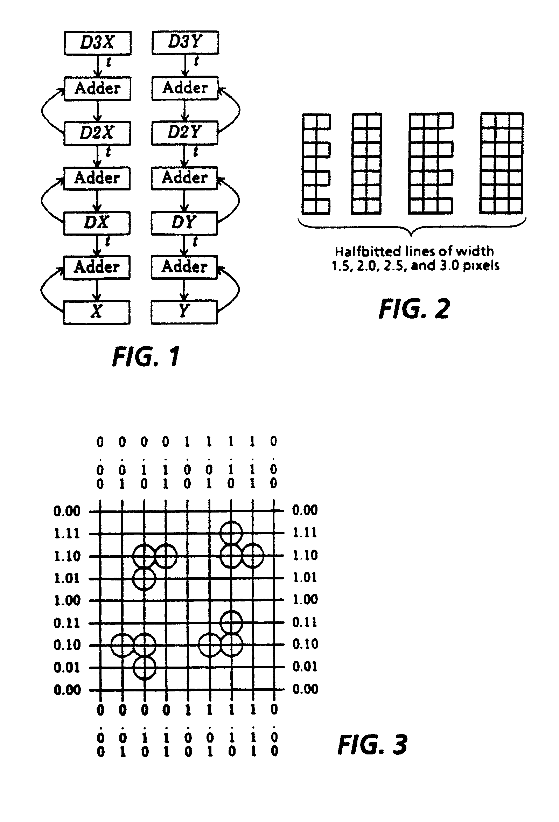

It is important that these calculations be done exactly, with no roundoff error, or various assumptions about the closure of contours will not be met. This sets a minimum register size which is a function of the number of steps taken per spline and the order of the spline and the resolution that control points can be expressed. The halfbitter requires that the position of contour points be known as the difference between the actual position and the nearest even integer. This requires one binary place to the left of the binary point. To satisfy the accuracy requirements we need $nq + r$ places to the right of the binary point for a total register length of $nq + r + 1$ bits in the registers where $n$ is the order of the spline, $q$ is the $\log_2$ number of steps and $r$ is the $\log_2$ accuracy of control points on the pixel grid. If this exceeds the length of the register then the spline is subdivided into two splines and the algorithm applied to each piece recursively. A general spline stepper can be implemented with two parallel sets of registes for $x$ and $y$ coordinates as shown in Figure 1.

For straight lines, if an order 1 spline is described by the points **A**, and **B** with **A** and **B** being the endpoints of the segment, then the spline is the set of points **X** satisfying $\mathbf{X}(t) = \binom{1}{0}\mathbf{A}(1 - t) + \binom{1}{1}\mathbf{B}t - \mathbf{A}(1 - t) + \mathbf{B}t$

with $t$ ranging between 0 and 1. If $t$ is stepped by $\delta = 2^{-k}$ and the control points are multiples of $2^{-r}$ then all calculations can be done in fixed point. To maintain accuracy of the curve shapes it is necessary to have the pixel grid be something like 8 times the coordinate grid so that control points are moved less than 1/8 of a pixel when quantitized to the grid making $r = 3$. Remembering that

$\mathbf{D}_0 = \mathbf{A}$

$\mathbf{D}_1 = \mathbf{B} - \mathbf{A}$

the initial values for the difference scheme are:

$\mathbf{R}_0 = \mathbf{D}_0$

$\mathbf{R}_1 = \mathbf{D}_1 \delta$

Backward differences are the same as forward differences in the case of straight lines.

Once the register pair values are calculated, successive values of the spline coordinates can be calculated by:

Either forward or backward differences:

$\mathbf{R}_0 \leftarrow \mathbf{R}_0 + \mathbf{R}_1$.

Cubic Splines

(Although the following formulae are specifically for the cubic spline case, these formulae can be generalized in an obvious way for higher or lower order splines.)

If a spline is described by the points **A**, **B**, **C**, and **D** with **A** and **D** being the endpoints of the segment and **B** and **C** being the interior control points then the spline is the set of points **X** satisfying

$\mathbf{X}(t) = \binom{3}{0}\mathbf{A}(1 - t)^3 + \binom{3}{1}\mathbf{B}t(1 - t)^2 + \binom{3}{2}\mathbf{C}t^2(1 - t) + \binom{3}{3}\mathbf{D}t^3$

$= \mathbf{A}(1 - t)^3 + 3\mathbf{B}t(1 - t)^2 + 3\mathbf{C}t^2(1 - t) + \mathbf{D}t^3$

with $t$ ranging between 0 and 1. If $t$ is stepped by $\delta = 2^{-k}$ and the control points are multiples of $2^{-r}$ then all calculations can be done in fixed point. To maintain accuracy of the curve shapes it is necessary to have the pixel grid be something like 8 times the coordinate grid so that control points are moved less than 1/8 of a pixel when quantitized to the grid. Remembering that

$\mathbf{D}_0 = \mathbf{A}$

$\mathbf{D}_1 = \mathbf{B} - \mathbf{A}$

$\mathbf{D}_2 = \mathbf{C} - 2\mathbf{B} + \mathbf{A}$

$\mathbf{D}_3 = \mathbf{D} - 3\mathbf{C} + 3\mathbf{B} - \mathbf{A}$

the initial values for the difference scheme are:

$\mathbf{R}_0 = \mathbf{D}_0$

$R_1 = 3D_1\delta + 3D_2\delta^2 + D_3\delta^3$

$R_2 = 6D_2\delta^2 + 6D_3\delta^3$

$R_3 = 6D_3\delta^3$

Backward differences would be:

$R_0 = D_0$

$R_1 = 3D_1\delta - 3D_2\delta^2 + D_3\delta^3$

$R_2 = 6D_2\delta^2 - 6D_3\delta^3$

$R_3 = 6D_3\delta^3$

Once the register pair values are calculated successive values of the spline coordinates can be calculated by:

Forward differences:

$R_0 \leftarrow R_0 + R_1$

$R_1 \leftarrow R_1 + R_2$

$R_2 \leftarrow R_2 + R_3$

Backward differences:

$R_2 \leftarrow R_2 + R_3$

$R_1 \leftarrow R_1 + R_2$

$R_0 \leftarrow R_0 + R_1$

## Disambiguation

One problem when calculating new values of $x$ and $y$ simultaneously is that the algorithm may indicate stepping in $x$ and $y$ simultaneously without indicating which one to step first. To solve this problem we can do a further calculation if both $x$ and $y$ step during the same $t$-step. The issue here is to determine whether to take the $x$ step before the $y$ step or vice versa. Let $x_1$ and $y_1$ be the coordinates of the previous point and $x_2$ and $y_2$ be the coordinates of the current point where the point (0, 0) is the current sampling point. There are 2 preferred ways to do this additional calculation. These methods approximate the spline by short line segments.

1) Calculate the sign of $x_1 y_2 - x_2 y_1$ as this will disambiguate the two cases. This solution requires a fast multiply.

2) At the start $x_1$ and $x_2$ have different signs and so do $y_1$ and $y_2$ (as this is the only case where a simultaneous step in $x$ and $y$ occurs) then we can replace either $x_1$ and $y_1$ or $x_2$ and $y_2$ with the midpoint $(x_1 + x_2)/2$ and $(y_1 + y_2)/2$ (with the remainder of the division ignored) and the sign of the cross product remains the same. We always choose to replace the coordinate pair with the same signs as the midpoint until this is impossible (neither pair has exactly the same signs as the midpoint) and then the sign of the cross product will be obvious and one can step from $(x_1, y_1)$ to the midpoint to $(x_2, y_2)$ without a simultaneous step. If either of the two new terms is zero then the sign is also obvious. If both of the new terms goes to zero then the cross product is zero and an arbitrary (but consistent) choice must be made. This method is guaranteed to terminate in $\log_2 k$ steps where $k$ is the number of bits in the representation of $x$ or $y$.

## Choosing the step size

Differentiating X with respect to t we get

$X'(t) = 3(1-t)^2(B - A) + 6t(1 - t)(C - B) + 3t^2(D - C)$

which is the equation of a spline with the control points 3(B-A), 3(C-B), 3(D-C).

Since a spline curve lies entirely within the convex hull of its control points we know that this derivative spline is entirely confined within the triangle 3(B-A), 3(C-B), 3(D-C). This triangle must have coordinates bounded by $2^k$ if stepping by $2^{-k}$ is not to exceed a step size of one. This is necessary to avoid multiple pixel steps in a single cycle. Choose the least $k$ such that

$2^k > 3|(B_x - A_x)|$

$2^k > 3|(C_x - B_x)|$

$2^k > 3|(D_x - C_x)|$

$2^k > 3|(B_y - A_y)|$

$2^k > 3|(C_y - B_y)|$

$2^k > 3|(D_y - C_y)|$

If these inequalities can not be satisfied within the bound set by the available register length we can subdivide the spline into two splines and repeat the algorithm on each half. Eventually this subdivision will result in a set of splines that can be plotted with step sizes less than one.

If we are stepping $t$ in units of $2^{-k}$ then the initial differences for the spline with the control ponts **A**, **B**, **C** and **D** are

**A**

$3(B - A)\delta + 3(C - 2B + A)\delta^2 + (D - 3C + 3B - A)\delta^3$

$6(C - 2B + A)\delta^2 + 6(D - 3C + 3B - A)\delta^3$

$6(D - 3C + 3B - A)\delta^3$

where

$\delta = 2^{-k}$

Once the starting differences are known successive points along the curve can be calculated as follows:

Initialization:

$X \leftarrow A_x$

$\Delta X \leftarrow 3(B_x - A_x)\delta + 3(C_x - 2B_x + A_x)\delta^2 + (D_x - 3C_x + 3B_x - A_x)\delta$

$\Delta^2 X \leftarrow 6(C_x - 2B_x + A_x)\delta^2 + 6(D_x - 3 C_x + 3B_x - A_x)\delta^3$

$\Delta^3 X \leftarrow 6(D_x - 3C_x + 3B_x - A_x)\delta^3$

$Y \leftarrow A_y$

$\Delta Y \leftarrow 3(B_y - A_y)\delta + 3(C_y - 2B_y + A_y)\delta^2 + (D_y - 3C_y + 3B_y - A_y)\delta^3$

$\Delta^2 Y \leftarrow 6(C_y - 2B_y + A_y)\delta^2 + 6(D_y - 3 C_y + 3B_y - A_y)\delta^3$

$\Delta^3 Y \leftarrow 6(D_y - 3C_y + 3B_y - A_y)\delta^3$

Step $t$:

$X \leftarrow X + \Delta X$

$\Delta X \leftarrow \Delta X + \Delta^2 X$

$\Delta^2 X \leftarrow \Delta^2 X + \Delta^3 X$

$Y \leftarrow Y + \Delta Y$

$\Delta Y \leftarrow \Delta Y + \Delta^2 Y$

$\Delta^2 Y \leftarrow \Delta^2 Y + \Delta^3 Y$

These equations would result in registers X and Y as the actual coordinates of successive points on the spline. If only $3k + r + 1$ bits of the coordinates are retained and overflows are ignored then X and Y are the correct modulus 2 values for the coordinates.

Halfbitting Strategies

Halfbitting is a technique for increasing the effective resolution of a printer for large coherent objects such as lines and curves. It involves approximating some boundaries by alternating pixels.

Figure 2 shows lines with width 1.5, 2, 2.5, and 3 represented using halfbitting. There is a difficulty when it is desired to halfbit in both the $x$ and $y$ directions. It appears that such techniques do unaesthetic things to diagonal lines. This invention half bits in the $x$ or $y$ direction but changes from $x$-halfbitting to $y$-halfbitting depending on the orientation of the boundary.

Implementation

A standard spline stepper is used to step along the curve. For each step a determination is made as to whether the step is nearly horizontal, nearly vertical, or diagonal. For each case the appropriate halfbitting sample points are used. If two adjacent steps have differing classifications then an output step may be produced to allow for the shifting of the sampling points. The overall algorithm is as follows:

1. Set OLDDIRECTION to NOHALFBIT (= no halfbitting).

2. For each step of the stepper do:

3. If the step is not in the same halfbitting mode as the last step then output steps if necessary to make halfbitting modes coincide.

4. Do the step and issue step commands according to the appropriate halfbitting table.

5. End of for loop.

6. Reset direction to NOHALFBIT issuing steps as necessary. State variables of the Halfbitter

RX0, RX1, RX2, RX3

RY0, RY1, RY2, RY3

CurrentX

CurrentY

old direction {XHALFBIT, YHALFBIT, NOHALFBIT}

current direction {XHALFBIT, YHALFBIT, NOHALFBIT}

Directions are defined by the deltas of the current step. Precisely:

XHALFBIT if $4|\delta y| < |\delta x|$

YHALFBIT if $4|\delta x| < |\delta y|$

NOHALFBIT otherwise

With reference to Figure 3, sampling normally occurs at $0.10_2$ and $1.10_2$ but if the step direction is nearly horizontal or nearly vertical then the sampling is at $0.01_2$ and $1.01_2$ or $0.11_2$ and $1.11_2$ depending on the integer part of the other coordinate.

The center circle of each triplet is the normal sampling point and the other circles are the halfbitting sampling locations. A table of steps as a function of halfbitting strategy changes (direction changes) follows (where * indicates either 0 or 1):

NOHALFBIT to XHALFBIT

if x < 1 and y = *.01 then

STEP + Y

else if x ≥ 1 and y = *.10 then

STEP-Y

NOHALFBIT to YHALFBIT

if y < 1 and x = *.01 then

STEP + X

else if y ≥ 1 and x = *.10 then

STEP-X

XHALFBIT to NOHALFBIT

if x < 1 and y = *.01 then

STEP-Y

else if x ≥ 1 and y = *.10 then

STEP + Y

XHALFBIT to NOHALFBIT

if y < 1 and x = *.01 then

STEP-X

else if y ≥ 1 and x = *.10 then

STEP + X

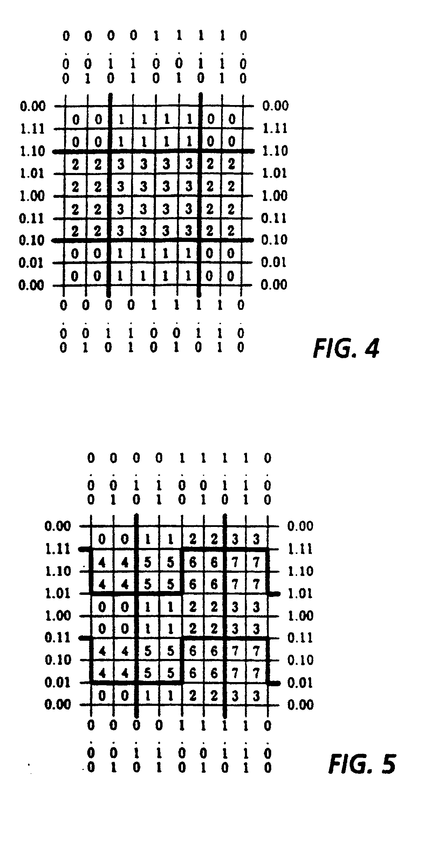

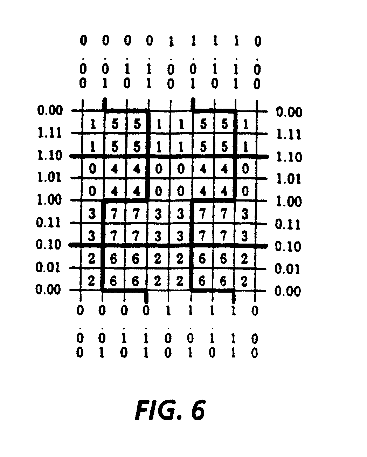

The length of the stepper's step is bounded by 1.00 in both x and y. Since halfbitting is attempted only when the slope of the step is within a slope of 1/4 to horizontal or vertical the step in the "small" direction is bounded by 1/4. This distance is small enough that the halfbitting produces reasonable outlines. The transition table for no halfbitting is illustrated in Figure 4, and for X and Y halfbitting illustrated in Figures 5 and 6.

Fine point: all disambiguation must disambiguate 0 consistently (i.e., boundaries that are coincident with sampling points). This means that lines intersecting sampling points are assumed to pass above the points and vertical lines are assumed to pass to the right as shown in the following algorithm

Algorithm:

#define NE to be    /* + X + Y */

#define SE  to be   /* + X-Y */


#define SW     to be    /* -X-Y */

#define NW     to be    /* -X + Y */

NoState [X, Y] = State of point when not halfbitting


Y ↓ \ X →

| | 0 | 1 | 2 | 3 | 4 | 5 | 6 | 7 |
|---|---|---|---|---|---|---|---|---|
| 0 | 0 | 0 | 1 | 1 | 1 | 1 | 0 | 0 |
| 1 | 0 | 0 | 1 | 1 | 1 | 1 | 0 | 0 |
| 2 | 2 | 2 | 3 | 3 | 3 | 3 | 2 | 2 |
| 3 | 2 | 2 | 3 | 3 | 3 | 3 | 2 | 2 |
| 4 | 2 | 2 | 3 | 3 | 3 | 3 | 2 | 2 |
| 5 | 2 | 2 | 3 | 3 | 3 | 3 | 2 | 2 |
| 6 | 0 | 0 | 1 | 1 | 1 | 1 | 0 | 0 |
| 7 | 0 | 0 | 1 | 1 | 1 | 1 | 0 | 0 |

XState [X, Y] = State of point when x halfbitting

Y ↓ \ X →

| | 0 | 1 | 2 | 3 | 4 | 5 | 6 | 7 |
|---|---|---|---|---|---|---|---|---|
| 00 | 0 | 1 | 1 | 2 | 2 | 3 | 3 | |
| 14 | 4 | 5 | 5 | 6 | 6 | 7 | 7 | |
| 24 | 4 | 5 | 5 | 6 | 6 | 7 | 7 | |
| 30 | 0 | 1 | 1 | 2 | 2 | 3 | 3 | |
| 40 | 0 | 1 | 1 | 2 | 2 | 3 | 3 | |
| 54 | 4 | 5 | 5 | 6 | 6 | 7 | 7 | |
| 64 | 4 | 5 | 5 | 6 | 6 | 7 | 7 | |
| 70 | 0 | 1 | 1 | 2 | 2 | 3 | 3 | |

YState [X, Y] = State of point when y halfbitting

Y ↓ \ X →

| | 0 | 1 | 2 | 3 | 4 | 5 | 6 | 7 |
|---|---|---|---|---|---|---|---|---|
| 02 | 6 | 6 | 2 | 2 | 6 | 6 | 2 | |
| 12 | 6 | 6 | 2 | 2 | 6 | 6 | 2 | |
| 23 | 7 | 7 | 3 | 3 | 7 | 7 | 3 | |
| 33 | 7 | 7 | 3 | 3 | 7 | 7 | 3 | |
| 40 | 4 | 4 | 0 | 0 | 4 | 4 | 0 | |
| 50 | 4 | 4 | 0 | 0 | 4 | 4 | 0 | |
| 61 | 5 | 5 | 1 | 1 | 5 | 5 | 1 | |
| 71 | 5 | 5 | 1 | 1 | 5 | 5 | 1 | |

XHalfbitting [X, Y] = Stepping required when changing to x halfbitting

Y ↓ \ X →

| | 0 | 1 | 2 | 3 | 4 | 5 | 6 | 7 |
|---|---|---|---|---|---|---|---|---|
| 0 | 0 | 0 | 0 | 0 | 0 | 0 | 0 | 0 |

| | 0 | 0 | 0 | 0 | 2 | 2 | 2 | 2 |
|---|---|---|---|---|---|---|---|---|
| 1 | 0 | 0 | 0 | 0 | 2 | 2 | 2 | 2 |
| 2 | 1 | 1 | 1 | 1 | 0 | 0 | 0 | 0 |
| 3 | 0 | 0 | 0 | 0 | 0 | 0 | 0 | 0 |
| 4 | 0 | 0 | 0 | 0 | 0 | 0 | 0 | 0 |
| 5 | 0 | 0 | 0 | 0 | 2 | 2 | 2 | 2 |
| 6 | 1 | 1 | 1 | 1 | 0 | 0 | 0 | 0 |
| 7 | 0 | 0 | 0 | 0 | 0 | 0 | 0 | 0 |

YHalfbitting [X, Y] = Stepping required when changing to y halfbitting

Y ↓ \ X →

| | 0 | 1 | 2 | 3 | 4 | 5 | 6 | 7 |
|---|---|---|---|---|---|---|---|---|
| 0 | 0 | 0 | 2 | 0 | 0 | 0 | 2 | 0 |
| 1 | 0 | 0 | 2 | 0 | 0 | 0 | 2 | 0 |
| 2 | 0 | 0 | 2 | 0 | 0 | 0 | 2 | 0 |
| 3 | 0 | 0 | 2 | 0 | 0 | 0 | 2 | 0 |
| 4 | 0 | 1 | 0 | 0 | 0 | 1 | 0 | 0 |
| 5 | 0 | 1 | 0 | 0 | 0 | 1 | 0 | 0 |
| 6 | 0 | 1 | 0 | 0 | 0 | 1 | 0 | 0 |
| 7 | 0 | 1 | 0 | 0 | 0 | 1 | 0 | 0 |

NoSampler [dir, oldstrategy, newstrategy] = action on no halfbitting step

oldstrategy ↓ \ newstrategy →

| | 0 | 1 | 2 | 3 | 0 | 1 | 2 | 3 |
|---|---|---|---|---|---|---|---|---|
| 0 | 0 | 2 | 3 | 14 | 0 | 1 | 3 | 13 |
| 1 | 2 | 0 | 14 | 3 | 1 | 0 | 13 | 3 |
| 2 | 3 | 14 | 0 | 2 | 3 | 13 | 0 | 1 |
| 3 | 14 | 3 | 2 | 0 | 13 | 3 | 1 | 0 |

| | 0 | 1 | 2 | 3 | 0 | 1 | 2 | 3 |
|---|---|---|---|---|---|---|---|---|
| 0 | 0 | 2 | 6 | 16 | 0 | 1 | 6 | 15 |
| 1 | 2 | 0 | 16 | 6 | 1 | 0 | 15 | 6 |
| 2 | 6 | 16 | 0 | 2 | 6 | 15 | 0 | 1 |
| 3 | 16 | 6 | 2 | 0 | 15 | 6 | 1 | 0 |

XSampler [dir, oldstrategy, newstrategy] = action on x halfbitting step

oldstrategy ↓ \ newstrategy →

| | 0 | 1 | 2 | 3 | 4 | 5 | 6 | 7 | 0 | 1 | 2 | 3 | 4 | 5 | 6 | 7 |
|---|---|---|---|---|---|---|---|---|---|---|---|---|---|---|---|---|
| 0 | 0 | X | 2 | 0 | 3 | X | 2 | 0 | 0 | 1 | 1 | X | 3 | 17 | 19 | X |
| 1 | 2 | 0 | X | 2 | 29 | 3 | X | 31 | X | 0 | 0 | 1 | X | 3 | 0 | 1 |
| 2 | 2 | 0 | 0 | X | 29 | 3 | 0 | X | 1 | X | 0 | 1 | 4 | X | 0 | 1 |
| 3 | X | 2 | 2 | 0 | X | 5 | 2 | 0 | 0 | 1 | X | 0 | 3 | 17 | X | 0 |
| 4 | 0 | X | 32 | 0 | 0 | X | 12 | 6 | 0 | 1 | 1 | X | 0 | 1 | 7 | X |
| 5 | 2 | 0 | X | 2 | 2 | 0 | X | 8 | X | 0 | 0 | 20 | X | 0 | 6 | 11 |
| 6 | 10 | 3 | 3 | X | 10 | 3 | 0 | X | 18 | X | 3 | 18 | 4 | X | 0 | 1 |
| 7 | X | 30 | 30 | 3 | X | 5 | 2 | 0 | 3 | 9 | X | 3 | 3 | 9 | X | 0 |

| | 0 | 1 | 2 | 3 | 4 | 5 | 6 | 7 | 0 | 1 | 2 | 3 | 4 | 5 | 6 | 7 |
|---|---|---|---|---|---|---|---|---|---|---|---|---|---|---|---|---|
| 0 | 0 | X | 2 | 0 | 0 | X | 26 | 6 | 0 | 1 | 1 | X | 0 | 1 | 7 | X |
| 1 | 2 | 0 | X | 2 | 2 | 0 | X | 8 | X | 0 | 0 | 1 | X | 0 | 6 | 22 |
| 2 | 2 | 0 | 0 | X | 2 | 0 | 6 | X | 1 | X | 0 | 1 | 24 | X | 6 | 22 |
| 3 | X | 2 | 2 | 0 | X | 28 | 26 | 6 | 0 | 1 | X | 0 | 0 | 1 | X | 6 |
| 4 | 6 | X | 12 | 6 | 0 | X | 12 | 6 | 6 | 21 | 21 | X | 0 | 1 | 7 | X |
| 5 | 25 | 6 | X | 25 | 2 | 0 | X | 8 | X | 6 | 6 | 11 | X | 0 | 6 | 11 |
| 6 | 27 | 0 | 0 | X | 10 | 3 | 0 | X | 1 | X | 0 | 1 | 4 | X | 0 | 1 |

7 X 2 2 0 X 5 2 0 0 23 X 0 3 9 X 0

YSampler [dir, oldstrategy, newstrategy] = action on y halfbitting step

oldstrategy ↓ \ newstrategy →

| | 0 | 1 | 2 | 3 | 4 | 5 | 6 | 7 | 0 | 1 | 2 | 3 | 4 | 5 | 6 | 7 |
|---|---|---|---|---|---|---|---|---|---|---|---|---|---|---|---|---|
| 0 | 0 | 3 | 3 | X | 2 | 46 | 48 | X | 0 | 3 | 3 | X | 0 | 3 | 9 | X |
| 1 | X | 0 | 0 | 3 | X | 2 | 0 | 3 | X | 0 | 0 | 3 | X | 0 | 1 | 33 |
| 2 | 3 | X | 0 | 3 | 10 | X | 0 | 3 | 3 | X | 0 | 3 | 35 | X | 1 | 33 |
| 3 | 0 | 3 | X | 0 | 2 | 46 | X | 0 | 0 | 3 | X | 0 | 0 | 3 | X | 1 |
| 4 | 0 | 3 | 3 | X | 0 | 3 | 9 | X | 1 | 34 | 34 | X | 0 | 3 | 9 | X |
| 5 | X | 0 | 0 | 47 | X | 0 | 1 | 4 | X | 1 | 1 | 4 | X | 0 | 1 | 4 |
| 6 | 45 | X | 2 | 45 | 10 | X | 0 | 3 | 3 | X | 0 | 3 | 10 | X | 0 | 3 |
| 7 | 2 | 5 | X | 2 | 2 | 5 | X | 0 | 0 | 36 | X | 0 | 2 | 5 | X | 0 |
| 0 | 0 | X | 6 | 0 | 2 | X | 6 | 0 | 0 | X | 6 | 0 | 0 | X | 37 | 1 |
| 1 | 6 | 0 | X | 6 | 42 | 2 | X | 44 | 6 | 0 | X | 6 | 6 | 0 | X | 11 |
| 2 | 6 | 0 | 0 | X | 42 | 2 | 0 | X | 6 | 0 | 0 | X | 6 | 0 | 1 | X |
| 3 | X | 6 | 6 | 0 | X | 12 | 6 | 0 | X | 6 | 6 | 0 | X | 39 | 37 | 1 |
| 4 | 0 | X | 43 | 0 | 0 | X | 7 | 1 | 1 | X | 7 | 1 | 0 | X | 7 | 1 |
| 5 | 6 | 0 | X | 6 | 6 | 0 | X | 11 | 38 | 1 | X | 38 | 6 | 0 | X | 11 |
| 6 | 8 | 2 | 2 | X | 8 | 2 | 0 | X | 40 | 0 | 0 | X | 8 | 2 | 0 | X |
| 7 | X | 41 | 41 | 2 | X | 12 | 6 | 0 | X | 6 | 6 | 0 | X | 12 | 6 | 0 |

```
xHalfBit = TRUE /* if halfbitting in x else FALSE */

yHalfBit = TRUE /* if halfbitting in y else FALSE */

newstrategy = NOHALFBIT;

initialize RX0, RX1, RX2, RX3, RY0, RY1, RY2, RY3 for spline

/* Beginning of stepping loop using backward differences */

for i = 0 to n

    oldX = RX0
    oldY = RY0
    RX2 ← RX2 + RX3
    RX1 ← RX1 + RX2
    RX0 ← RX0 + RX1
    RY2 ← RY2 + RY3
    RY1 ← RY1 + RY2
    RY0 ← RY0 + RY1
```

```
oldstrategy = newstrategy
if RX1 ≥ 0 and RY1 ≥ 0 then
    direction = NE
if RX1 ≥ 0 and RY1 < 0 then
    direction = SE
if RX1 < 0 and RY1 ≥ 0 then
    direction = NW
if RX1 < 0 and RY1 < 0 then
    direction = SW
if (|RY1| < |RX1 / 4| and xHalfBit) then
    newStrategy = XHALFBIT
else if (|RX1| < |RY1 / 4| and yHalfBit) then
    newStrategy = YHALFBIT
else
    newStrategy = NOHALFBIT
if (oldstrategy ≠ newstrategy) then
    if (oldstrategy = XHALFBIT) then
        switch XHalfbitting[oldX, oldY] in
            case 1: -Y;
            case 2: +Y;
        endcase;
    if (oldstrategy = YHALFBIT) then
        switch YHalfbitting[oldX, oldY] in
            case 1: -X;
            case 2: +X;
        endcase;
    /* strategy is now NOHALF */
    if (newstrategy = XHALFBIT) then
        switch XHalfbitting[oldX, oldY] in
            case 1: +Y;
            case 2: -Y;
        endcase;
    if (newstrategy = YHALFBIT) then
        switch YHalfbitting[oldX, oldY] in
            case 1: +X;
            case 2: -X;
```

```
        endcase;
    switch (newStrategy) {
        case NOHALFBIT:
            action = NoSampler[direction, NoState[oldState], NoState[newState]];

        case XHALFBIT:
            action = XSampler[direction, XState[oldState], XState[newState]];
        case YHALFBIT:
            action = YSampler[direction, YState[oldState], YState[newState]];
    }       /* end switch (newStrategy) */
```

/*      The disambiguate entries mean to calculate $x_1y_2 - x_2y_1$ around the indicated point knowing the direction. If the relation is true relative to zero then chose the first alternative, otherwise choose the second. */

```
    switch (action) {
        case 0:  /* no move */
        case 1:   + X
        case 2:  -X
        case 3:   + Y
        case 4:   + X + Y
        case 5:  -X + Y
        case 6:  -Y
        case 7:   + X -Y
        case 8:  -X -Y
        case 9:   + Y + X
        case 10:   + Y -X
        case 11:  -Y + X
        case 12:  -Y -X
        case 13: disambiguate around (*.10,*.10) NE ≥ { + X + Y} else { + Y + X}
        case 14: disambiguate around (*.10,*.10) NW > { + Y -X} else {-X + Y}
        case 15: disambiguate around (*.10,*.10) SE ≥ {-Y + X} else { + X -Y}
        case 16: disambiguate around (*.10,*.10) SW > {-X -Y} else {-Y -X}
        case 17: disambiguate around (0.10,*.01) NE ≥ { + X + Y} else { + Y + X}
        case 18: disambiguate around (1.10,*.11) NE ≥ { + X + Y} else { + Y + X}
        case 19: disambiguate around (0.10,*.01) NE ≥ { + X} else { + Y + X -Y}
        case 20: disambiguate around (1.10,*.11) NE ≥ {-Y + X + Y} else { + X}
        case 21: disambiguate around (0.10,*.01) SE ≥ {-Y + X} else { + X -Y}
        case 22: disambiguate around (1.10,*.11) SE ≥ {-Y + X} else { + X -Y}
```

```
case 23:  disambiguate around (0.10,*.01) SE ≥ { + X} else { + Y + X -Y}
case 24:  disambiguate around (1.10,*.11) SE ≥ {-Y + X + Y} else { + X}
case 25:  disambiguate around (0.10,*.01) SW > {-X -Y} else {-Y -X}
case 26:  disambiguate around (1.10,*.11) SW > {-X -Y} else {-Y -X}
case 27:  disambiguate around (0.10,*.01) SW > { + Y -X -Y} else {-X}
case 28:  disambiguate around (1.10,*.11) SW > {-X} else {-Y -X + Y}
case 29:  disambiguate around (0.10,*.01) NW > { + Y -X} else {-X + Y}
case 30:  disambiguate around (1.10,*.11) NW > { + Y -X} else {-X + Y}
case 31:  disambiguate around (0.10,*.01) NW > { + Y -X -Y} else {-X}
case 32:  disambiguate around (1.10,*.11) NW > {-X} else {-Y -X + Y}
case 33:  disambiguate around (*.01,0.10) NE ≥ { + X + Y} else { + Y + X}
case 34:  disambiguate around (*.11,1.10) NE ≥ { + X + Y} else { + Y + X}
case 35:  disambiguate around (*.01,0.10) NE ≥ { + X + Y -X} else { + Y}
case 36:  disambiguate around (*.11,1.10) NE ≥ { + Y} else {-X + Y + X}
case 37:  disambiguate around (*.01,0.10) SE ≥ {-Y + X} else { + X -Y}
case 38:  disambiguate around (*.11,1.10) SE ≥ {-Y + X} else { + X -Y}
case 39:  disambiguate around (*.01,0.10) SE ≥ {-Y} else { + X -Y -X}
case 40:  disambiguate around (*.11,1.10) SE ≥ {-X -Y + X} else {-Y}
case 41:  disambiguate around (*.01,0.10) SW > {-X -Y} else {-Y -X}
case 42:  disambiguate around (*.11,1.10) SW > {-X -Y} else {-Y -X}
case 43:  disambiguate around (*.01,0.10) SW > {-Y} else { + X -Y -X}
case 44:  disambiguate around (*.11,1.10) SW > {-X -Y + X} else {-Y}
case 45:  disambiguate around (*.01,0.10) NW > { + Y -X} else {-X + Y}
case 46:  disambiguate around (*.11,1.10) NW > { + Y -X} else {-X + Y}
case 47:  disambiguate around (*.01,0.10) NW > { + X + Y -X} else { + Y}
case 48:  disambiguate around (*.11,1.10) NW > { + Y} else {-X + Y + X}
    }               /* end switch (action) */
}    /* end for loop */
/* Now set the strategy back to NOHALFBIT */
if (oldstrategy # NOHALFBIT) then
    if (oldstrategy = XHALFBIT) then
        switch XHalfbitting[oldX, oldY] in
            case 1: -Y;
            case 2: + Y;
        endcase;
    if (oldstrategy = YHALFBIT) then
        switch YHalfbitting[oldX, oldY] in
```

```
            case 1: -X;

            case 2: + X;

         endcase;

     /* end of algorithm */
```

Raster Fill Algorithm

The XOR fill algorithm consists of writing a one-bit at the start of every transition from black to white or white to black in the pixel array. The area can then be filled by initializing a bit to zero and successively XORing the next pixel into this bit and storing the result back into the pixel array. In the middle of a solid black or white area the original pixel array will be zero and the temporary bit will not change when XORed with the pixels from the pixel array. Whenever a boundary between black and white is crossed, a one-bit will be found in the pixel array and XORing this one-bit with the temporary bit will invert the temporary bit's sense and prepare it for filling the next run of the opposite polarity.

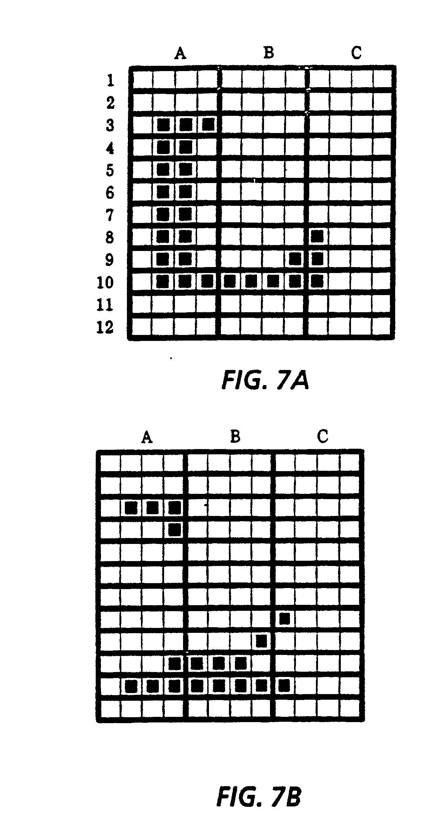

The basic idea of the cross-scan fill algorithm is to write a bit at the start of every cross-scan black run and at the start of every vertical white run. It is then possible to fill the area by XORing successive scan lines. In effect, the fill algorithm is done in parallel for each bit of the machine word. Since this can be done a full word at a time the speed of the algorithm will be very high even on standard microprocessors. In Figures 7a an 7b, the filled bitmap (7a) is the desired filled bitmap. The outlined bitmap (7b) is the form of the outline to be filled by the present invention. In this example words are assumed to be 4 bits long and run in the horizontal direction. In the example there is a run of black bits from A3 to A10. The outline bitmap has a bit at the start of this run at A3 and a bit just beyond the end of this run at A11. If $\oplus$ is the symbol for exclusive OR then the algorithm proceeds as follows:

| Operation | A | B | C |
|---|---|---|---|
| $T \leftarrow 0$ | 0000 | 0000 | 0000 |
| $T \leftarrow T \oplus A1$ | 0000 | 0000 | 0000 |
| $A1 \leftarrow T$ | 0000 | 0000 | 0000 |
| $T \leftarrow T \oplus A2$ | 0000 | 0000 | 0000 |
| $A2 \leftarrow T$ | 0000 | 0000 | 0000 |
| $T \leftarrow T \oplus A3$ | 0111 | 0000 | 0000 |
| $A3 \leftarrow T$ | 0111 | 0000 | 0000 |
| $T \leftarrow T \oplus A4$ | 0110 | 0000 | 0000 |
| $A4 \leftarrow T$ | 0110 | 0000 | 0000 |
| $T \leftarrow T \oplus A5$ | 0110 | 0000 | 0000 |

| | | |
|---|---|---|
| A5 ← T | 0110 0000 | 0000 |
| T ← T ⊕ A6 | 0110 0000 | 0000 |
| A6 ← T | 0110 0000 | 0000 |
| T ← T ⊕ A7 | 0110 0000 | 0000 |
| A7 ← T | 0110 0000 | 0000 |
| T ← T ⊕ A8 | 0110 0000 | 1000 |
| A8 ← T | 0110 0000 | 1000 |
| T ← T ⊕ A9 | 0110 0001 | 1000 |
| A9 ← T | 0110 0001 | 1000 |
| T ← T ⊕ A10 | 0111 1111 | 1000 |
| A10 ← T | 0111 1111 | 1000 |
| T ← T ⊕ A11 | 0000 0000 | 0000 |
| A11 ← T | 0000 0000 | 0000 |
| T ← T ⊕ A12 | 0000 0000 | 0000 |
| A12 ← T | 0000 0000 | 0000 |

The algorithm then proceeds to columns B and C in a similar fashion.

In order to use the XOR fill algorithm it is necessary to set the appropriate bits along the outline of the filled regions. Assume that a stepper steps in the +X, +Y, -X, or -Y directions. Then at any time the current location (X, Y) can be calculated. The algorithm for storing bits is as follows:

$$+X: \quad BM[X, Y] \leftarrow BM[X, Y] \oplus 1$$
$$X \leftarrow X + 1$$

$$-X: X \leftarrow X - 1$$
$$BM[X, Y] \leftarrow BM[X, Y] \oplus 1$$

$$+Y: \quad Y \leftarrow Y + 1$$

$$-Y: Y \leftarrow Y - 1$$

It is necessary that all contours be exactly closed. After using the above algorithm the bitmap BM is prepared to be filled by the XOR fill algorithm described above. For efficiency reasons the stepping algorithm can be rewritten to set multiple bits in the same word simultaneously. The more efficient algorithm for hardware (given in pseudo code) is:

17

```
+ X: bitword ← bitword ⊕ bit ; Insert bit into cache word

   bit ← bit > > 1  ; Shift bit position in word right

   if (bit = = 0)  ; If bit fell off of word...

   then

     bit ← highbit  ; Put back bit at other end of word

     if (bitword ! = 0)  ; If any bits in cache word

       BM[X, Y] ← BM[X, Y] ⊕ bitword  ; Put cached data into bitmap

     X ← X + 1  ; Increment X word address

     bitword ← 0


-X: bit ← bit < < 1  ; Shift bit position in word left

   if (bit = = 0)  ; If bit fell off of word...

   then

     bit ← lowbit  ; Put back bit at other end of word

     if (bitword ! = 0)  ; If any bits in cache word

       BM[X, Y] ← BM[X, Y] ⊕ bitword  ; Put cached data into bitmap

     X ← X - 1  ; Decrement X word address

     bitword ← 0

   bitword ← bitword ⊕ bit  ; Insert bit into cache word


+ Y: if (bitword ! = 0)  ; If any bits in cache word

   then

     BM[X, Y] ← BM[X, Y] ⊕ bitword  ; Put cached data into bitmap

     bitword ← 0

   Y ← Y + 1


-Y: if (bitword ! = 0)  ; If any bits in cache word

   then

     BM[X, Y] ← BM[X, Y] ⊕ bitword  ; Put cached data into bitmap

     bitword ← 0

   Y ← Y - 1
```

This cross-scan fill algorithm is more efficient during the fill operation because each bit of the word is independent and can be calculated rapidly and independently. This algorithm is also more efficient during the writing of the edges because nothing has to be written for vertical edges and less than one bit per scanline for nearly vertical lines.

While there has been illustrated and described what is at present considered to be a preferred embodiment of the present invention, it will be appreciated that numerous changes and modifications are likely to occur to those skilled in the art, and it is intended in the appended claims to cover all those changes and modifications which fall within the scope of the present invention.

**Claims**

1. A method of rapidly converting graphical objects in outline form to raster bit map form for imaging pixels on a raster device by successive scan lines in an imaging system having a memory for storing the graphical objects in outline form comprising the steps of:
allocating a set of memory locations for output bit maps and initializing the memory locations,
operating a stepper routine for each segment of the outline form to produce a quasi-outline of the graphical object and storing the quasi-outline in said memory locations, said quasi-outline indicating the start and end of each scan line of the graphical object, and
successively Exclusive OR-gating each scan line into the following scan line to produce a filled raster object.

2. The method of claim 1 wherein the outline forms are splines.

3. The method of claim 1 or claim 2 wherein the step of operating a stepper routine includes the step of resolving diagonal operations into either x-y or y-x orthogonal steps.

4. The method of any one of claims 1 to 3 wherein the step of operating the stepper routine includes the step of half bitting by using a table look up to make edges appear on half pixel locations of the graphical object produced on the raster device.

5. The method of claim 4 wherein the step of operating the stepper routine includes the step of using integers to avoid round-off errors.

6. The method of claim 1 wherein the step of operating the stepper routine includes the step of adjusting sample points.

7. The method of claim 1 wherein the step of operating the stepper routine includes the steps of converting the segments to difference equations, calculating successive points along the segments using fixed point arithmetic, and providing a table look up for said points to determine suitable x and y steps in the raster.

8. A method of rapidly filling in an outline of a graphical object on the display of an imaging system having a memory for storing graphical objects in outline form comprising the steps of:
providing a sequence of raster scan lines for imaging the graphical object,
Exclusive OR-Grating each successive raster scan line of the raster with the result of the Exclusive OR-Gating of the preceding scan line, and
filling in the outline form of the graphical object on the display.

9. A method of filling in the splines of a graphical object on the display of an imaging system having a memory for storing graphical objects in outline form, the method including a halfbitting routine and comprising the steps of:
running a stepper routine to generate successive x and y steps for displaying the object,
providing a table look-up for selected bits of a resulting position relative to the display to generate halfbitting information, and
using a disambiguation technique to define the outline for pre-determined x and y step relationships.

10. A method of converting graphical objects in outline form as splines to raster bit map form for imaging pixels on a raster device of a raster imaging system having a memory for storing graphical objects in outline form as splines, comprising the steps of:
converting the splines to difference equations,
calculating successive points along the spline using fixed point arithmetic, and
providing a table look up for said points to determine suitable x and y steps in the raster.

11. The method of claim 10 wherein the step of converting splines to difference equations includes the step of insuring that no operation is greater than one raster cell.

12. The method of claim 10 or claim 11 wherein the splines have control points including the step of rounding the control points of the splines to a grid before converting to difference equations.

13. The method of any one of claims 10 to 12 including the step of determining the proper order of simultaneous x-y steps on the raster device.

14. The method of claim 13 wherein the step of determining the proper order includes the step of calculating by straight line approximation.

15. The method of claim 14 wherein the step of determining the proper order includes the step of subdivision of the x-y step.

FIG. 1

Halfbitted lines of width
1.5, 2.0, 2.5, and 3.0 pixels

FIG. 2

FIG. 3

**FIG. 4**

**FIG. 5**

**FIG. 6**

**FIG. 7A**

**FIG. 7B**